# EUROPEAN PATENT APPLICATION

(11) **EP 2 508 292 A1**
(43) Date of publication of application: **10.10.2012**
(21) Application number: 12162219.5
(22) Date of filing: 29.03.2012
(51) Int. Cl.: B23K 20/12

(54) **Friction stir welding process for large structures**

(30) Priority: 05.04.2011 US 201113079854
(71) Applicant: General Electric Company, Schenectady, NY 12345 (US)
(72) Inventor: Szabo, Attila, Greenville, SC South Carolina 29615-4614 (US)
(74) Representative: Cleary, Fidelma

(57) **Abstract**

A welding method that utilizes a friction stir welding (FSW) technique to weld large structures, for example, very large cylindrical tower sections of wind turbines. The method involves welding at least two workpieces together by metallurgically joining faying surfaces of the workpieces. The workpieces are placed together so that their faying surfaces face each other and a joint region is defined by and between the faying surfaces. The workpieces are then friction stir welded together by forcing a tool into the joint region, rotating the tool about an axis thereof to cause the tool to penetrate the joint region, and causing the tool to travel along the joint region to form a weld joint that metallurgically joins the faying surfaces and produces a welded assembly comprising the workpieces.

## Description

### BACKGROUND OF THE INVENTION

The present invention generally relates to welding methods. More particularly, this invention is directed to a welding process suitable for welding very large cylindrical sections, for example, cylindrical tower sections of wind turbines, while overcoming difficulties often encountered when producing welds in thick wall sections, such as defects, distortion and a deleterious heat affected zone (HAZ).

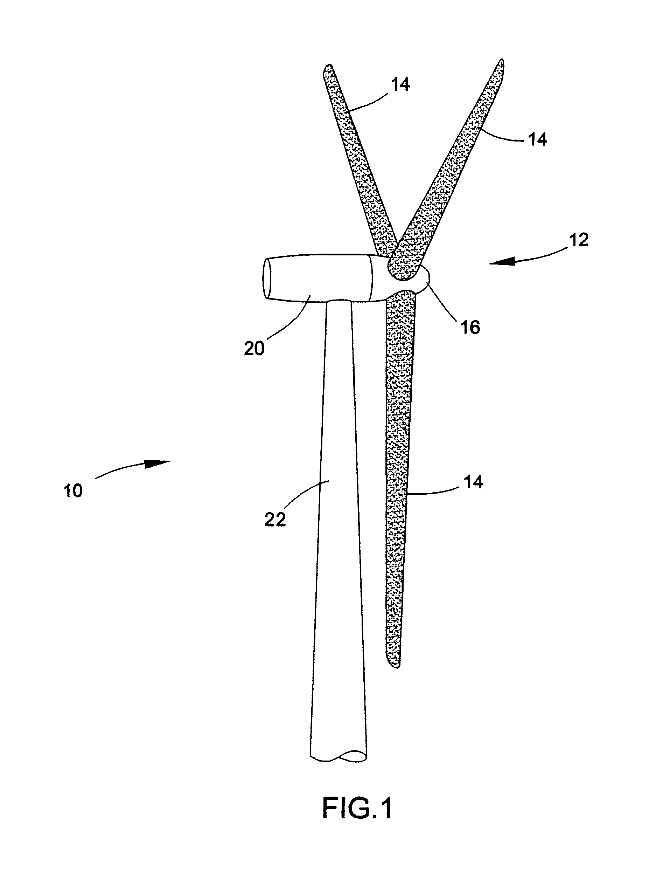

The welding of very large structures poses numerous challenging problems. FIG. 1 represents a wind turbine 10 as a particular example of a very large welded structure. The wind turbine 10 includes a rotor blade assembly 12 comprising multiple blades 14 radially extending from a hub 16. The hub 16 is typically mounted on a main shaft (not shown), which forms part of a drive train connected to an electric generator. The main shaft, drive train and generator are all housed within a nacelle 20 mounted on a tower 22. Depending on the size of the turbine 10, the tower 22 can be very large, often exceeding ten feet (three meters) in diameter. Because of its height, the tower 22 is often constructed of multiple cylindrical sections having wall thicknesses of often one centimeter or more. The cylindrical sections are then welded together end-to-end and, due to their very large diameters, require very long circumferential welds. The welding of such thick sections with arc welding processes, such as gas metal arc welding (GMAW; also known as metal inert gas (MIG) welding) and submerged arc welding (SAW), can result in numerous defects in the welds, such as lack of fusion, porosity, and even cracks, which can considerably weaken the tower 22. Distortion is also a significant issue when several large cylindrical sections must be joined together to form the tower 22.

Solid state welding techniques, such as inertia welding and friction stir welding (FSW), offer various advantages over conventional fusion (arc) welding processes as a result of being relatively low-temperature metallurgical joining processes. FSW involves applying a very large axial force to insert a rotating tool into the joint area to be welded and, as the tool is rotated, slowly causing the tool to travel along the joint to cause frictional heating and plasticizing of the metal on either side of the joint. In essence, the weld zone is formed by "stirring" the hot plasticized metal, which recombines behind the tool to create a solid state weld without melting the metal. Certain advantages of solid state welding arise from the fact that these techniques do not require filler metals or a shield gas, as is typical for arc welding processes. Furthermore, because the parent metal being welded is not melted during solid state welding, re-solidification of the parent metal does not occur within the weld joint. As a result, solid state welding can produce weld joints in essentially any environment, and the joints are free of defects and have properties and structures that are virtually identical to that of the parent metal. The weld joints are also typically distortion-free, and defects can be readily avoided if the process stays within appropriate operating parameters.

Though FSW offers certain benefits as noted above, challenges remain when attempting to weld very large structures with very thick wall sections, as is the case with wind turbine towers. For example, the thick wall sections pose a challenge in terms of the weld penetration depth of the rotating tool. Furthermore, tower sections aligned for welding will often have a significant gap between the faying surfaces of the sections due to tolerances and the very large size of the sections. Another problem encountered when performing FSW on circumferential joints is that, as the tool is withdrawn at the end of the weld, an exit hole tends to form because the stirred material recombines behind the tool and does not "fill in" the space occupied by the tool.

In view of the above, it would be desirable if solid state welding techniques, and in particular FSW, could be adapted for welding cylindrical tower sections of wind turbines and other very large structures. The ability to do so could permit smaller hardware to be transported to an installation site, since FSW is well suited for enabling hardware to be assembled and welded at an installation site. As such, field welding of tower sections together could ease logistical problems associated with transporting large welded assemblies to installation sites of wind turbines.

### BRIEF DESCRIPTION OF THE INVENTION

The present invention provides a welding method that utilizes a FSW technique to weld large structures, for example, very large cylindrical tower sections of wind turbines, which are otherwise difficult to weld using conventional arc welding techniques without resulting in defects, distortion and porosity levels.

According to one aspect, the invention resides in a method involving welding at least two workpieces together by metallurgically joining faying surfaces of the workpieces. The workpieces are placed together so that their faying surfaces face each other and a joint region is defined by and between the faying surfaces. The workpieces are then friction stir welded together by forcing a tool into the joint region, rotating the tool about an axis thereof to cause the tool to penetrate the joint region and heat the faying surfaces via frictional contact, and causing the tool to travel along the joint region to form a weld joint that metallurgically joins the faying surfaces and produces a welded assembly comprising the workpieces. The tool is then withdrawn from the joint region by causing the tool to travel onto a wedge located on the joint region. The wedge is preferably located to produce a weld joint overlap, and is preferably configured to cause the tool to completely withdraw from the joint region without creating an exit hole in the weld joint.

A technical effect of the invention is the ability to use an FSW technique to eliminate various weld-quality problems often encountered when welding very large and thick sections, as is the case with cylindrical tower sections of wind turbines. The FSW technique can be employed to produce a deep penetration weld in a single pass, and can be performed without filler metal and shield gases that are usually required by arc welding techniques. Because of the type of equipment involved in performing FSW processes, welding can be performed on job sites, which allows large diameter cylindrical sections of a wind turbine tower to be individually shipped to installation sites, possibly in half or quarter sections, greatly simplifying transportation.

Advantages associated with the FSW technique of this invention are also applicable to the construction of a variety of other structures, including but not limited to structures employed in the power generation, aerospace, infrastructure, medical, and industrial applications.

Other aspects and advantages of this invention will be better appreciated from the following detailed description.

### BRIEF DESCRIPTION OF THE DRAWINGS

Embodiments of the present invention will now be described, by way of example only, with reference to the accompanying drawings in which:
FIG. 1 schematically represents a wind turbine whose tower can be constructed with the use of an FSW process of this invention.
FIGS. 2 and 3 schematically represent an FSW process according to an embodiment of this invention.
FIG. 4 represents an FSW tool of a type that can be used in FSW processes of this invention.
FIG. 5 schematically represents the use of a wedge to avoid the creation of an exit hole according to another embodiment of the invention.

### DETAILED DESCRIPTION OF THE INVENTION

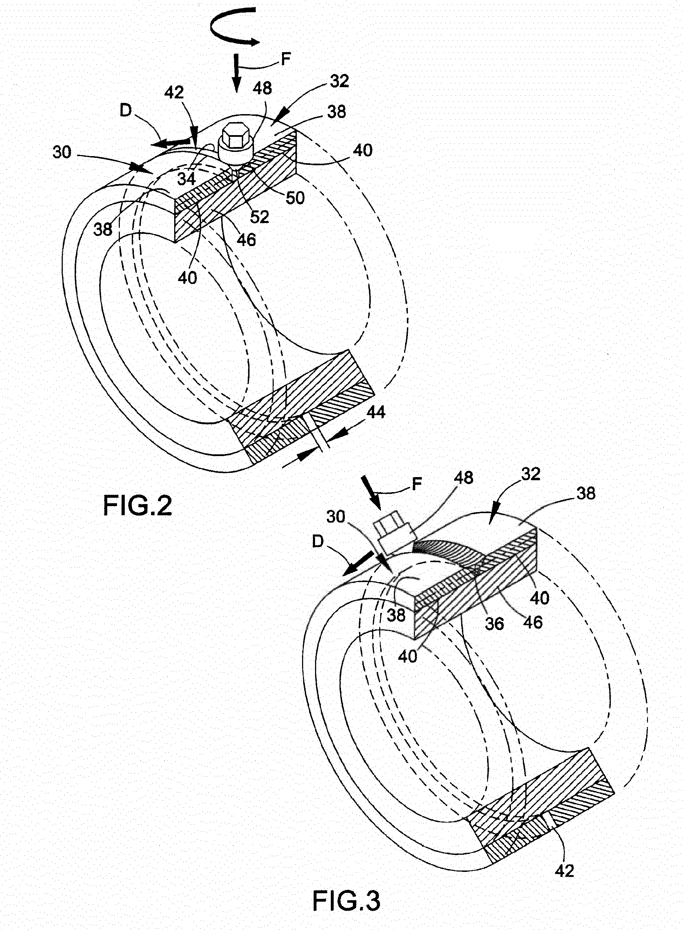

FIGS. 2 and 3 schematically represent an FSW process suitable for metallurgically joining very large structures that require welding at relative thick sections, for example, one centimeter or more. As a nonlimiting example, in the typical case for large cylindrical sections of the wind turbine tower 22 of FIG. 1, thicknesses of eleven to twenty-two millimeters are often encountered. The FSW process is also suitable for fabricating various other components used in power generation applications, as well as components intended for a wide variety of other applications, including aerospace, infrastructure, medical, industrial applications, etc. The FSW process preferably yields a deep-penetrating weld joint that is capable of being free of defects, distortion and a deleterious heat affected zone (HAZ).

FIGS. 2 and 3 represent two steps performed during welding of a pair of workpieces 30 and 32 with a FSW process according to an embodiment of the invention. The workpieces 30 and 32 may be castings, wrought, or powder metallurgical form, and may be formed of a variety of materials, nonlimiting examples of which include nickel-, iron-, and cobalt-based alloys. For example, wrought steel alloys such as A572 are commonly used in the construction of wind turbine towers of the type represented in FIG. 1. The workpieces 30 and 32 have faying surfaces 34 that are to be metallurgically joined by a weld joint 36 (FIG. 3). In FIGS. 2 and 3, the faying surfaces 34 define a butt joint, which is desirable from the standpoint of manufacturing costs, particularly when welding very large workpieces 30 and 32. However, other joint configurations could foreseeably be used. The faying surfaces 34 are contiguous with oppositely-disposed surfaces 38 and 40 of the workpieces 30 and 32, between which the through-thickness of each workpiece 30 and 32 is defmed.

In FIG. 2, the workpieces 30 and 32 are shown placed together so that their faying surfaces 34 face each other, and a joint region 42 is identified as defined by and between the faying surfaces 34. In the situation where the workpieces 30 and 32 are large cylindrical sections of the tower 22, the faying surfaces 34 are defined at axial ends of the workpieces 30 and 32 and are abutted against each other in preparation for welding, resulting in the joint region 42 and the resulting weld joint 36 extending circumferentially around the workpieces 30 and 32. Because of the large size of the workpieces 30 and 32, the joint region 42 is further represented as defining a gap 44 between the faying surfaces 34, resulting from the impracticality of fabricating the workpieces 30 and 32 so that their faying surfaces 34 perfectly mate together. For cylindrical sections of the tower 22, such a gap 44 can be as much as two millimeters or more in some locations. FIGS. 2 and 3 further show a backing material 46 placed beneath the workpieces 30 and 32, at least in the region immediately below the joint region 42. The backing material 46 serves to support the workpieces 30 and 32 during the welding operation, particular when the workpieces 30 and 32 are subjected to very large forces typically required to metallurgically join the workpieces 30 and 32 using an FSW method. The backing material 46 can be formed of a variety of materials and have various constructions, and will not be discussed in any further detail.

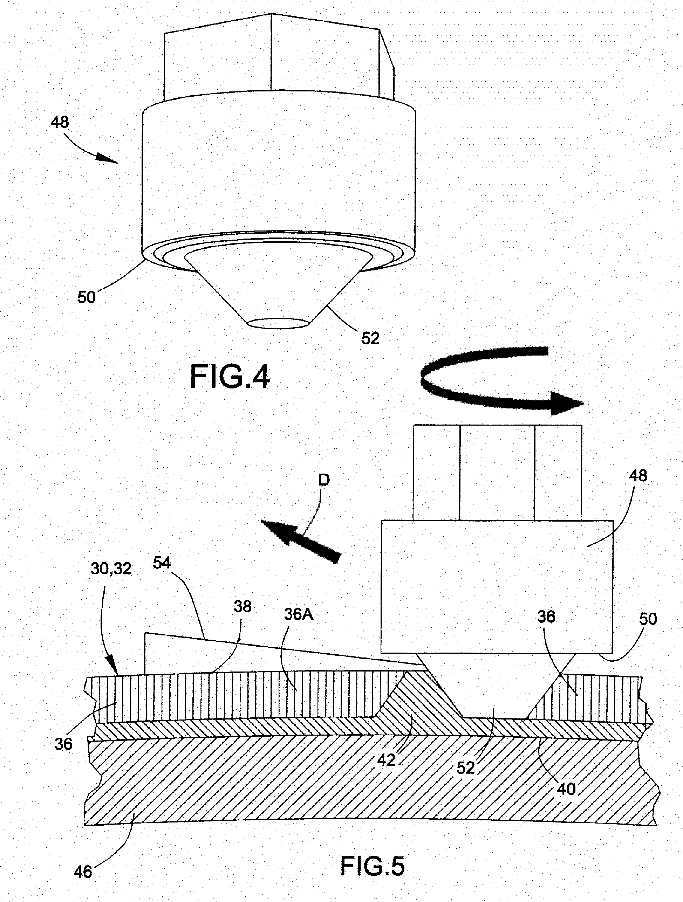

According to a particular aspect of the invention, though joint gaps of about two millimeters and joint thicknesses (normal to the surfaces 38 and 40) of about one centimeter or more pose particular challenges when attempting to use conventional electric arc welding methods, the present invention overcomes such problems by adapting a FSW process, one embodiment of which is represented in FIGS. 2 and 3. FIGS. 2, 3 and 4 represent an example of a tool 48 for carrying out the FSW process. The tool 48 is represented as having a generally cylindrical shape that defines a tool shoulder 50 and a probe 52 protruding from the end of the tool 48 that defines the shoulder 50. The probe 52 generally has a frustoconical shape, with a minimum diameter at its distal end of roughly one-third its maximum diameter at the base of the probe 52 (adjacent the shoulder 50). As evident from FIGS. 2 and 3, the rotating probe 52 is adapted to be forcibly inserted into the joint region 42 between the workpieces 30 and 32. Because the axial length of the probe 52 affects the maximum penetration depth of the weld joint 36, optimal probe lengths will depend on the particular application. Preferred axial lengths for an FSW process performed on workpieces 30 and 32 having thicknesses between eleven and twenty-two millimeters are believed to be in a range of about 10.5 to about 21.6 millimeters. The shoulder 50 is represented in FIGS. 2 and 3 as abutting the adjacent surfaces 38 of the workpieces 30 and 32 during the FSW process, thereby serving to provide additional frictional heat to the weld joint area. In the embodiment of FIG. 5, the shoulder 50 is defined by two annular-shaped stepped surfaces that together defme roughly one-quarter to one-third of the diameter at the end of the tool 40, such that the base of the probe 52 accounts for roughly two-thirds to three-quarters of the diameter.

From the above, it is apparent that the shoulder 50 engages both surfaces 38 of the workpieces 30 and 32 and the probe 52 penetrates the joint region 42 during the FSW process depicted in FIGS. 2 and 3. For this reason, the tool 48 or at least its shoulder 50 and probe 52 are preferably formed of high-strength and wear-resistant materials. Notable examples include tungsten-rhenium alloys, which can provide long life for the tool 48 when welding thick steel sections. Suitable diameters for the tool 48 will depend on the particular application, though a diameter of at least 35 millimeters is believed to be preferred when welding cylindrical sections of a wind turbine tower that are formed of a steel alloy and have wall thicknesses of one centimeter or more. Due to the high forces and friction entailed in metallurgically joining thick workpieces by an FSW process, the tool 48 can be internally cooled with a fluid coolant that flows through internally passages (not shown) within the tool 48. Additionally, the surfaces 38 of the workpieces 30 and 32 can also be cooled with a flowing fluid coolant during the FSW process, for example, a coolant flowing at a rate of about 1.5 to about 2.5 gpm (about 6 to 10 liters/minute) and directed at the weld joint 36 about 1.5 inch (about 4 cm) behind the submerged tool 48.

As evident from FIGS. 2 and 3, the tool 48 is caused to travel in a direction "D" along the joint region 42 while an axial force "F" is applied to the tool 48 and the tool 48 is caused to rotate about its axis. FIG. 3 represents the probe 52 of the tool 48 as penetrating most but not the entire thickness of the joint region 42, for example, about 96% of the entire thickness, though greater and lesser penetrations are possible. The axial force applied to the tool 48 and the rotational and travel speeds of the tool 48 will depend on the particular application, and particularly the material and thickness of the workpieces 30 and 32 and the material and size of the tool 48. When welding cylindrical sections of a wind turbine tower that are formed of a steel alloy and have wall thicknesses of one centimeter or more, suitable axial forces are typically about 12,000 pounds (about 53,000 N) or more, for example, about 12,000 to about 14,000 pounds (about 53,000 to about 62,000 N), suitable rotational speeds are believed to be about 150 to about 160 rpm, and suitable travel speeds are believed to be about 4 to about 6 inches (about 10 to about 15 cm) per minute. Optimal operating parameters can be ascertained without undue experimentation. Motion and control of the tool 48 relative to the workpieces 30 and 32 can be achieved by installing the tool 48 in a large milling machine or other suitable equipment capable of generating the axial force and torque required for the tool 48 to penetrate, rotate within, and travel along the joint region 42.

The FSW process represented in FIGS. 2 and 3 does not require any filler metal, and therefore the entire weld joint 36 is formed from material of the workpieces 30 and 32, and more particularly the material at and near the faying surfaces 34. The FSW process represented in FIGS. 2 and 3 also does not require the use of a shield gas, since the material undergoing welding is never molten. However, it is conceivable that supplemental material could be incorporated into the weld joint 36 and/or a shield gas could be used to further enhance weld properties. However, doing so may detract from the advantages that FSW processes have over conventional arc welding processes.

As known in the art, FSW processes tend to form an exit hole in the weld joint 36 as the tool 48 is withdrawn at the completion of the weld operation. In a particular embodiment invention represented in FIG. 5, the tendency for the tool 48 to form an exit hole is avoided by the placement of a wedge 54 over the joint region 42. The wedge 54 is shown in FIG. 5 as overlying a portion 36A of the weld joint 36 that was formed at the beginning of the FSW process, for example, when welding two cylindrical sections such that the joint region 42 and resulting weld joint 36 are both annular in shape as a result of the cylindrical shape of the workpieces 30 and 32. By placing the wedge 54 at a circumferential location (the weld portion 36A) of the weld joint 36 formed at the beginning of the FSW process, the tool 48 can be caused to overlap the portion 36A of the weld joint 36 and subsequently withdrawn from the weld joint 36 at the completion of the weld operation, resulting in the weld joint 36 being continuous around the entire circumference of the resulting welded assembly formed by the welded workpieces 30 and 32. The wedge 54 is preferably configured to cause the tool 48 to be completely withdrawn from the weld joint 36 as the tool 48 travels on the wedge 54. For this purpose, the maximum thickness of the wedge 54 is preferable equal to or greater than the axial length of the probe 52. To ensure the stability of the wedge 54, a suitable slope (relative to the surfaces 38 of the workpieces 30 and 32) is at most about 15 degrees, with a suitable slope believed to be about 5 to about 15 degrees.

As a result of the tool 48 withdrawing from the weld joint 36 through the wedge 54 at the completion of the FSW process as represented in FIG. 5, the weld joint 36 will extend into the wedge 54 with the result that the wedge 54 will be welded to the assembly formed by the welded workpieces 30 and 32. Under most circumstances, it will be desirable to remove the wedge 54 from the welded assembly, for example, by machining or grinding.

The FSW process represented in FIGS. 2, 3 and 5 is capable of significantly reducing if not eliminating defects and distortion within the weld joint 36 and a deleterious HAZ within the material of the workpieces 30 and 32 surrounding the weld joint 36. Reducing or eliminating defects (for example, porosity) in the weld joint 36 promotes weld metal properties that are capable of achieving longer lives for components subjected to fatigue as a result of cyclic operating conditions, as is the case with wind turbine towers. Currently, certain wind turbine towers are fabricated with weld joints formed by SAW, requiring multiple welding passes. With the present invention, it is believed that equivalent and potentially superior weld joints can be produced in a single pass.

Though the invention has been described in reference to welding two cylindrical-shaped workpieces 30 and 32 that are abutted end-to-end, the workpieces 30 and 32 could also be fabricated using an FSW process as described above. For example, large-diameter cylindrical sections of a wind turbine tower could be fabricated from half (semi-cylindrical) or quarter sections that are welded together along joint regions oriented in the longitudinal directions of the sections. Such a capability results in much smaller workpieces that can be more easily shipped to and FSW welded at job sites.

While the invention has been described in terms of particular embodiments, it is apparent that other forms could be adopted by one skilled in the art. Accordingly, the scope of the invention is to be limited only by the following claims.

## Claims

1. A method of welding at least two workpieces (30,32) together by metallurgically joining faying surfaces (34) of the workpieces, the method comprising:
placing the workpieces (30,32) together so that the faying surfaces (34) thereof face each other and a joint region (42) is defmed by and between the faying surfaces (34);
friction stir welding the workpieces (30,32) together by forcing a tool (40,48) into the joint region (42), rotating the tool (40) about an axis thereof to cause a portion of the tool (40,48) to penetrate the joint region (42) and heat the faying surfaces (34) via frictional contact, and causing the tool (40,48) to travel along the joint region (42) to form a weld joint (36) that metallurgically joins the faying surfaces (34) and produces a welded assembly (12) comprising the workpieces (30,32); and then
withdrawing the tool (40,48) from the joint region (42) by causing the tool (40,48) to travel onto a wedge (54) disposed on the joint region, the wedge (54) being configured to cause the tool (40,48) to completely withdraw from the joint region (42) as the tool (40,48) travels on the wedge without creating an exit hole in the weld joint (36).

2. The method according to claim 1, wherein the joint region (42) comprises a gap (44) of up to about 2 millimeters between the faying surfaces (34).

3. The method according to claim 1 or 2, wherein the tool (40,48) comprises a shoulder (50) and a probe (52) that protrudes in an axial direction of the tool (40,48) from the shoulder (50), and the shoulder (50) abuts adjacent surfaces (38,40) of the workpieces (30,32) and the probe (52) penetrates the joint region (42) during the friction stir welding step.

4. The method according to any of claims 1 to 3, wherein the wedge (54) is welded to the welded assembly (12) as a result of the withdrawing step.

5. The method according to claim 4, the method further comprising removing the wedge (54) from the welded assembly (12).

6. The method according to any of claims 1 to 5, further comprising supporting the workpieces (30,32) with a backing member (46) such that the workpieces (30,32) are between the tool (40,48) and the backing member (46) during the friction stir welding step.

7. The method according to any of claims 1 to 6, wherein the friction stir welding step does not melt the faying surfaces (34).

8. The method according to any preceding claim, wherein the faying surfaces (34) define a butt joint.

9. The method according to any preceding claim, wherein the workpieces (30,32) are formed of a steel alloy.

10. The method according to any preceding claim, wherein the joint region (42) has a thickness of greater than one centimeter.

11. The method according to any preceding claim, wherein an axial force of at least 53,000 N is applied to the tool during (40,48) the friction stir welding step.

12. The method according to any preceding claim, wherein the tool (40,48) is rotated at about 150 to about 160 rpm during the friction stir welding step.

13. The method according to any preceding claim, wherein the tool (40,48) is travels along the joint region (42) at about ten to fifteen centimeters per minute during the friction stir welding step.

14. The method according to any preceding claim, wherein the workpieces (30,32) are cylindrical workpieces and axially abut each other to define the joint region (42), the joint region (42) and the weld joint (36) extend circumferentially around the cylindrical workpieces (30,32), the friction stir welding step is initiated at a circumferential location of the joint region (42), and the wedge (54) is disposed on the joint region (42) at the circumferential location where the friction stir welding step is initiated.

15. The method according to claim 14, the method further comprising fabricating the cylindrical workpieces (30,32) by friction stir welding semi-cylindrical workpieces (30,32) together according to stir friction welding step of claim 1.

16. The method according to any preceding claim, wherein the welded assembly (12) is a wind turbine tower (22) and the workpieces (30,32) are cylindrical sections of the wind turbine tower (22).
